(19) **Europäisches Patentamt**
**European Patent Office**
**Office européen des brevets**

(11) **EP 4 475 041 A1**

(12) **EUROPEAN PATENT APPLICATION**
published in accordance with Art. 153(4) EPC

(43) Date of publication:
**11.12.2024 Bulletin 2024/50**

(51) International Patent Classification (IPC):
*G06N 10/60* (2022.01)

(21) Application number: **22924719.2**

(52) Cooperative Patent Classification (CPC):
**G06N 10/60**

(22) Date of filing: **01.02.2022**

(86) International application number:
**PCT/JP2022/003792**

(87) International publication number:
**WO 2023/148806 (10.08.2023 Gazette 2023/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **MORITA, Mikio**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING DEVICE**

(57) A circuit depth of a quantum circuit is reduced.

An information processing device (10) acquires a quantum circuit (1) to perform quantum chemical calculation by a variational quantum eigensolver, which includes a first quantum circuit (2) to create a wave function that expresses an electron orbit of a molecule to be calculated and a second quantum circuit (3) to transform a base of the wave function. Next, the information processing device (10) changes a first rotation angle applied to a rotation operation in the first quantum circuit (2) according to a second rotation angle applied to a partial circuit that indicates a rotation operation in the second quantum circuit (3). Then, the information processing device (10) deletes the partial circuit from the quantum circuit (1).

FIG. 1

EP 4 475 041 A1

**Description**

TECHNICAL FIELD

The present invention relates to an information processing program, an information processing method, and an information processing device.

BACKGROUND ART

In a field of quantum computers, a noisy intermediate-scale quantum computer (NISQ) is expected to be put into practical use. The NISQ is a medium-scale quantum computer without an error correction function. One application of the NISQ is calculation by a variational quantum eigensolver (VQE). The VQE is a variational algorithm that obtains a ground state of a quantum many-body system. The VQE may be used to, for example, perform quantum chemical calculation in the NISQ. The quantum chemical calculation is calculation for obtaining a molecular state and physical property information by solving a Schrödinger equation. At present, various studies are in progress for put calculation using the VQE into practical use.

As a technology related to the VQE, for example, a method for improving efficiency of the VQE has been proposed. Furthermore, a technology for improving efficiency of calculation for obtaining excited states of a Hamiltonian has also been proposed.

CITATION LIST

PATENT DOCUMENT

> Patent Document 1: Japanese Laid-open Patent Publication No. 2020-144400
> Patent Document 2: International Publication Pamphlet No. WO 2020/090559

SUMMARY OF INVENTION

TECHNICAL PROBLEM

As one of problems for practical use of the quantum chemical calculation by the VQE, the number of gate operations is large. The number of gate operations is represented by a circuit depth. When a circuit depth of a quantum circuit used for the calculation is large, various problems occur.

For example, a time needed for gate processing is several ns to several hundred ns, and a calculation time increases when the circuit depth is large. Furthermore, one quantum calculation (qubit initialization, gate operation, and measurement) is needed to be ended within a qubit duration (coherence time). When the circuit depth is too large, the calculation is not completed within the coherence time, and a calculation result may not be obtained. Moreover, in the quantum calculation, an error stochastically occurs in one gate operation. When the circuit depth is large (the number of gate operations is large), errors accumulate in a process of the quantum calculation, and an influence of the errors on the calculation result increases.

In one aspect, an object of the present case is to reduce a circuit depth of a quantum circuit.

SOLUTION TO PROBLEM

In one proposal, an information processing program for causing a computer to execute the following processing is provided.

The computer acquires a quantum circuit to perform quantum chemical calculation by a variational quantum eigensolver, which includes a first quantum circuit to create a wave function that expresses an electron orbit of a molecule to be calculated and a second quantum circuit to transform a base of the wave function. The computer changes a first rotation angle applied to a rotation operation in the first quantum circuit according to a second rotation angle applied to a partial circuit that indicates a rotation operation in the second quantum circuit. Then, the computer deletes the partial circuit from the quantum circuit.

ADVANTAGEOUS EFFECTS OF INVENTION

According to one aspect, a circuit depth of a quantum circuit may be reduced.

The object described above and other objects, features, and advantages of the present invention will become clear from the following description related to the appended drawings, which represent preferred embodiments as examples of the present invention.

BRIEF DESCRIPTION OF DRAWINGS

FIG. 1 is a diagram illustrating an example of an information processing method according to a first embodiment.

FIG. 2 is a diagram illustrating an example of a system configuration of a second embodiment.
FIG. 3 is a diagram illustrating an example of hardware of a classical computer.
FIG. 4 is a block diagram illustrating an example of functions of the classical computer for quantum chemical calculation by a variational quantum eigensolver (VQE).
FIG. 5 is a diagram illustrating an example of a quantum circuit of the VQE.
FIG. 6 is a diagram illustrating an example of an Ansatz circuit by a Jastrow factor ansatz.
FIG. 7 is a diagram illustrating an example of a base transformation circuit.
FIG. 8 is a diagram illustrating an example of a partial circuit of a first double electron excitation operation.
FIG. 9 is an example of a partial circuit indicating a single electron rotation operation.
FIG. 10 is a diagram illustrating an example of a partial circuit of a second double electron excitation operation.
FIG. 11 is a flowchart illustrating an example of a procedure of the quantum chemical calculation by the VQE.
FIG. 12 is a diagram illustrating an example of a method of calculating a rotation angle $\alpha$.
FIG. 13 is a diagram illustrating an example of a method of calculating a parameter $\theta'$.
FIG. 14 is a diagram illustrating an example of a method of calculating the rotation angle $\theta'$ after integration.
FIG. 15 is a diagram illustrating an example of optimization of the rotation angle $\theta'$.
FIG. 16 is a diagram illustrating a first example of integration of rotations.
FIG. 17 is a diagram illustrating a second example of the integration of rotations.
FIG. 18 is a flowchart illustrating an example of a procedure of quantum circuit generation processing.
FIG. 19 is a diagram illustrating an example of a combination management table.
FIG. 20 is a flowchart illustrating an example of a procedure of base energy calculation processing.
FIG. 21 is a diagram illustrating an example of quantum chemical calculation of a hydrogen molecule.
FIG. 22 is a diagram illustrating an example of a quantum circuit for obtaining a Hamiltonian of a first term of the hydrogen molecule.
FIG. 23 is a diagram illustrating an example of a quantum circuit for obtaining a Hamiltonian of a second term of the hydrogen molecule.
FIG. 24 is a diagram illustrating an example of a comparison result of a circuit depth.

DESCRIPTION OF EMBODIMENTS

Hereinafter, the present embodiments will be described with reference to the drawings. Note that each of the embodiments may be implemented in combination with a plurality of embodiments as long as no contradiction arises.

[First Embodiment]

A first embodiment is an information processing method for reducing a circuit depth of a quantum circuit for performing quantum chemical calculation by a variational quantum eigensolver (VQE).

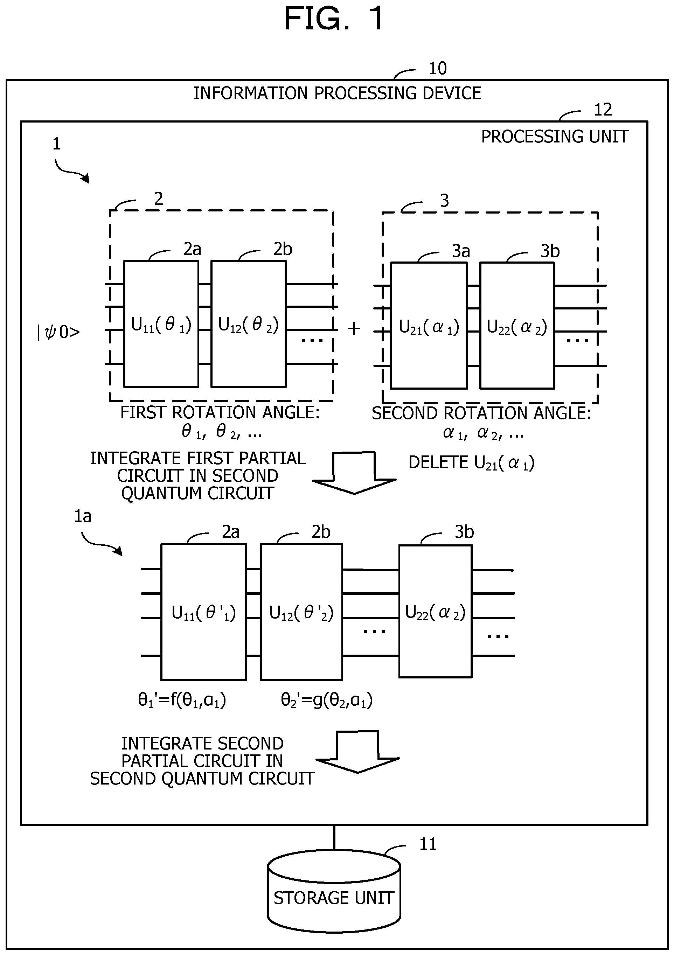

FIG. 1 is a diagram illustrating an example of the information processing method according to the first embodiment. In FIG. 1, an information processing device 10 for implementing the information processing method according to the first embodiment is illustrated. The information processing device 10 may implement the information processing method according to the first embodiment by, for example, executing an information processing program in which a predetermined processing procedure is described.

The information processing device 10 includes a storage unit 11 and a processing unit 12. The storage unit 11 is, for example, a memory or a storage device included in the information processing device 10. The processing unit 12 is, for example, a processor or an arithmetic circuit included in the information processing device 10.

The storage unit 11 stores information regarding a molecule to be calculated, a quantum circuit 1, and the like.

The processing unit 12 generates the quantum circuit 1 for implementing the quantum chemical calculation by the VQE by using a quantum computer. For example, the processing unit 12 acquires the quantum circuit 1 for performing the quantum chemical calculation by the VQE. In a case where the quantum circuit 1 has already been stored in the storage unit 11, the processing unit 12 acquires the quantum circuit 1 from the storage unit 11. Furthermore, the processing unit 12 may generate the quantum circuit 1 based on the information related to the molecule to be calculated.

The quantum circuit 1 includes a first quantum circuit 2 for creating a wave function expressing an electron orbit of the molecule to be calculated, and a second quantum circuit 3 for transforming a base of the wave function. The first quantum circuit 2 includes, for example, a plurality of partial circuits 2a, 2b, ... having different applied rotation angles. First rotation angles applied to the first quantum circuit 2 are, for example, rotation angles applied to rotation operations of Givens rotations. Furthermore, the second quantum circuit 3 includes a plurality of partial circuits 3a, 3b, ... indicating rotation operations.

The processing unit 12 changes first rotation angles $\theta_1$, $\theta_2$, ... applied to rotation operations in the first quantum circuit 2 according to second rotation angles $\alpha_1$, $\alpha_2$, ... applied to the partial circuits 3a, 3b, ... in the second quantum circuit 3. For example, in a case where the partial circuit 3a is to be deleted, the first rotation angles $\theta_1$, $\theta_2$, ... are changed to $\theta_1'$, $\theta_2'$, ... based on the second rotation angle $\alpha_1$ applied to the partial circuit 3a. The rotation angle $\theta_1'$ after the change of the first rotation angle $\theta_1$ according to the second rotation angle $\alpha_1$ may be represented as "$\theta_1' = f(\theta_1, \alpha_1)$". Similarly, the rotation angle $\theta_2'$ after the change of the first rotation angle $\theta_2$ according to the second rotation angle $\alpha_1$ may be represented as "$\theta_2' = g(\theta_2, \alpha_1)$".

Then, the processing unit 12 deletes the partial circuit to be deleted from the quantum circuit 1, and generates a quantum circuit 1a. In a case where the partial circuit 3a is to be deleted, the quantum circuit 1a obtained by deleting the partial circuit 3a from the quantum circuit 1 is generated. The processing unit 12 stores the generated quantum circuit 1a in, for example, the storage unit 11.

In this way, at least a part of the partial circuits 3a, 3b, ... in the second quantum circuit 3 may be integrated into the first quantum circuit 2, and the quantum circuit 1a obtained by deleting the corresponding partial circuit may be generated. In the example of FIG. 1, the partial circuit 3a to be executed first in the second quantum circuit 3 is integrated into the first quantum circuit 2. As a result, the partial circuit 3a is deleted from the quantum circuit 1a after the integration. As a result, a circuit depth of the quantum circuit 1a is reduced.

Note that the processing unit 12 may set a plurality of partial circuits among the partial circuits 3a, 3b, ... included in the second quantum circuit 3 as partial circuits to be deleted. In that case, the processing unit 12 selects, for example, the plurality of partial circuits 3a, 3b, ... in the second quantum circuit 3 as the partial circuits to be deleted in order from the earliest execution order. Then, every time the partial circuit is selected, the processing unit 12 executes processing of changing the first rotation angles according to the second rotation angle applied to the selected partial circuit and deleting the selected partial circuit. As a result, the circuit depth of the quantum circuit 1a after the integration may be further reduced.

The processing unit 12 may calculate the first rotation angles $\theta_1'$, $\theta_2'$, ... after the change based on a functional expression indicating a relationship between a third rotation angle corresponding to double electron excitation and the first rotation angle. Note that the third rotation angle indirectly represents electron transition intensity indicating ease of transition between states of an electron by an angle. For example, the processing unit 12 inputs a value of the first rotation angle before the change to an inverse function of a functional expression for obtaining the second rotation angle from the third rotation angle, and obtains a value of the inverse function at that time. Next, the processing unit 12 subtracts the obtained value of the inverse function from a value of the second rotation angle. Then, the processing unit 12 inputs a subtracted result to the functional expression described above to obtain a value of the functional expression. The processing unit 12 determines the finally obtained value of the functional expression as the first rotation angle after the change. By changing the first rotation angle in this way, it is possible to suppress deterioration of calculation accuracy of the quantum chemical calculation due to integration of the partial circuit in the second quantum circuit 3 into the first quantum circuit 2.

[Second Embodiment]

A second embodiment is a computer system that performs quantum chemical calculation by a VQE by using a quantum computer.

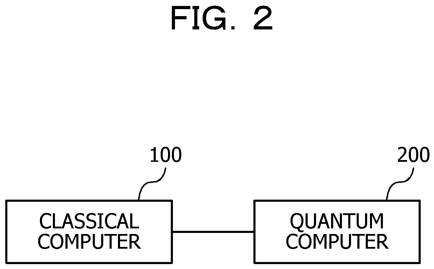

FIG. 2 is a diagram illustrating an example of a system configuration of the second embodiment. In the second embodiment, a classical computer 100 and a quantum computer 200 are coupled. The classical computer 100 is a Neumann-type computer, and performs processing such as generation of a quantum circuit and optimization of parameters used for calculation of the quantum circuit. The quantum computer 200 is a computer that performs the quantum chemical calculation by performing an operation based on a quantum gate on a qubit. The quantum computer 200 performs the quantum chemical calculation of a VQE algorithm according to the quantum circuit and the parameters generated by the classical computer 100, and calculates an energy expectation value.

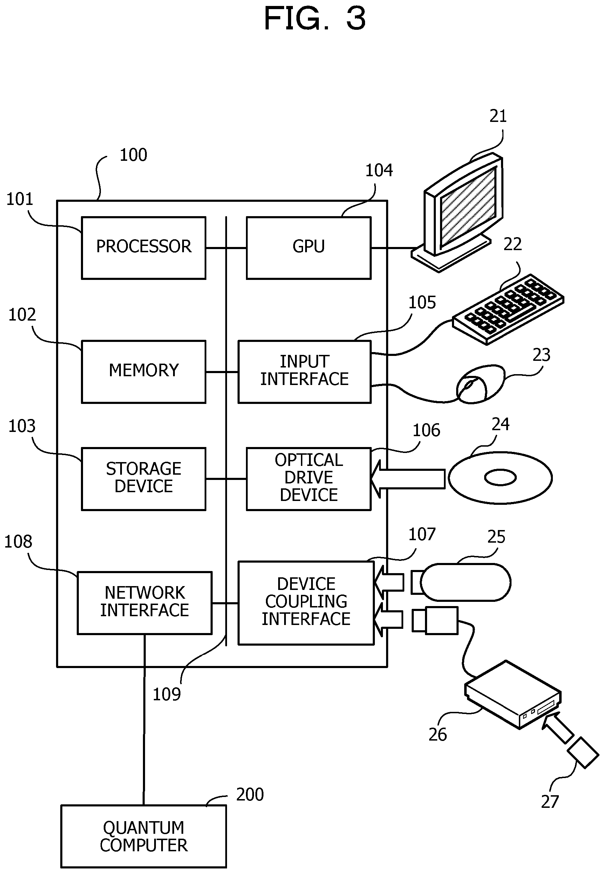

FIG. 3 is a diagram illustrating an example of hardware of the classical computer. The entire device of the classical computer 100 is controlled by a processor 101. A memory 102 and a plurality of peripheral devices are coupled to the processor 101 via a bus 109. The processor 101 may be a multiprocessor. The processor 101 is, for example, a central processing unit (CPU), a micro processing unit (MPU), or a digital signal processor (DSP). At least a part of functions implemented by the processor 101 executing a program may be implemented by an electronic circuit such as an application specific integrated circuit (ASIC) or a programmable logic device (PLD).

The memory 102 is used as a main storage device of the classical computer 100. In the memory 102, at least a part of operating system (OS) programs and application programs to be executed by the processor 101 is temporarily stored. Furthermore, in the memory 102, various types of data to be used in processing by the processor 101 are stored. As the memory 102, for example, a volatile semiconductor storage device such as a random access memory (RAM) is used.

Examples of the peripheral devices coupled to the bus 109 include a storage device 103, a graphics processing unit (GPU) 104, an input interface 105, an optical drive device 106, a device coupling interface 107, and a network interface 108.

The storage device 103 electrically or magnetically writes/reads data in/from a built-in recording medium. The storage device 103 is used as an auxiliary storage device of the classical computer 100. In the storage device 103, OS programs, application programs, and various types of data are stored. Note that, as the storage device 103, for example, a hard disk drive (HDD) or a solid state drive (SSD) may be used.

The GPU 104 is an arithmetic device that executes image processing, and is also referred to as a graphic controller. A monitor 21 is coupled to the GPU 104. The GPU 104 causes a screen of the monitor 21 to display an image according to an instruction from the processor 101. Examples of the monitor 21 include a display device using an organic electro luminescence (EL), a liquid crystal display device, and the like.

A keyboard 22 and a mouse 23 are coupled to the input interface 105. The input interface 105 transmits signals sent from the keyboard 22 and the mouse 23 to the processor 101. Note that the mouse 23 is an example of a pointing device, and another pointing device may also be used. Examples of the another pointing device include a touch panel, a tablet, a touch pad, a track ball, and the like.

The optical drive device 106 uses laser light or the like to read data recorded in an optical disk 24 or write data to the optical disk 24. The optical disk 24 is a portable recording medium in which data is recorded in a readable manner by reflection of light. Examples of the optical disk 24 include a digital versatile disc (DVD), a DVD-RAM, a compact disc read only memory (CD-ROM), a CD-recordable (R)/rewritable (RW), and the like.

The device coupling interface 107 is a communication interface for coupling the peripheral devices to the classical computer 100. For example, a memory device 25 and a memory reader/writer 26 may be coupled to the device coupling interface 107. The memory device 25 is a recording medium equipped with a communication function with the device coupling interface 107. The memory reader/writer 26 is a device that writes data to a memory card 27 or reads data from the memory card 27. The memory card 27 is a card-type recording medium.

The network interface 108 is coupled to the quantum computer 200. The network interface 108 exchanges data with the quantum computer 200.

The classical computer 100 may implement processing functions of the second embodiment with the hardware as described above. Note that the device indicated in the first embodiment may also be implemented by hardware similar to that of the classical computer 100 illustrated in FIG. 3.

The classical computer 100 implements the processing functions of the second embodiment by executing, for example, a program recorded in a computer-readable recording medium. The program in which processing content to be executed by the classical computer 100 is described may be recorded in various recording media. For example, the program to be executed by the classical computer 100 may be stored in the storage device 103. The processor 101 loads at least a part of the program in the storage device 103 into the memory 102 and executes the program. Furthermore, the program to be executed by the classical computer 100 may also be recorded in a portable recording medium such as the optical disk 24, the memory device 25, or the memory card 27. The program stored in the portable recording medium may be executed after being installed in the storage device 103 under the control of the processor 101, for example. Furthermore, the processor 101 may also read the program directly from the portable recording medium to execute the program.

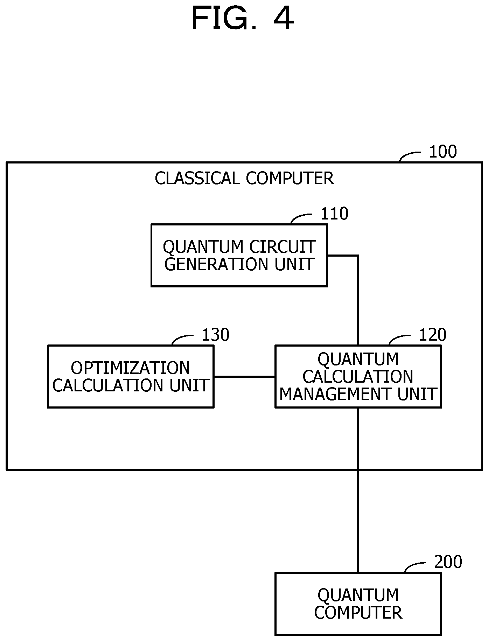

The classical computer 100 may perform the quantum chemical calculation by the VQE in cooperation with the quantum computer 200 by hardware illustrated in FIG. 4.

FIG. 4 is a block diagram illustrating an example of functions of the classical computer for the quantum chemical calculation by the VQE. The classical computer 100 includes a quantum circuit generation unit 110, a quantum calculation management unit 120, and an optimization calculation unit 130.

The quantum circuit generation unit 110 generates a quantum circuit for calculating energy of a quantum many-body system such as a molecule. For example, the quantum circuit generation unit 110 performs processing of generating a quantum circuit based on the VQE algorithm and reducing a circuit depth of the quantum circuit. The quantum circuit generation unit 110 transmits the quantum circuit with the reduced circuit depth to the quantum calculation management unit 120.

The quantum calculation management unit 120 instructs the quantum computer 200 to perform energy calculation based on the generated quantum circuit. For example, the quantum calculation management unit 120 sets a plurality of parameters θ related to a gate operation at a quantum gate in the quantum circuit. The quantum calculation management unit 120 sets initial values to values of the plurality of parameters θ before first quantum calculation. The quantum calculation management unit 120 acquires, from the quantum computer 200, a calculation result of energy based on the quantum circuit parameterized by the plurality of parameters θ. When the calculation result of the energy is acquired, the quantum calculation management unit 120 determines whether or not the energy has converged. When the energy has not converged, the quantum calculation management unit 120 instructs the optimization calculation unit 130 to optimize the parameters.

The optimization calculation unit 130 updates, for each quantum calculation, all or a part of the values of the plurality of parameters θ in a direction in which an energy value decreases. When optimization calculation ends, the optimization calculation unit 130 notifies the quantum calculation management unit 120 of the updated values of the plurality of parameters θ.

Note that the function of each element of the classical computer 100 illustrated in FIG. 4 may be implemented by, for example, causing a computer to execute a program module corresponding to the element.

Next, a method of calculating base energy of a molecule by the VQE will be described. Energy E to be obtained in the base energy calculation of the molecule by the VQE is represented by the following Expression (1).
[Expression 1]

$$E = \langle H \rangle = \frac{\langle \varphi(\vec{\theta}) | H | \varphi(\vec{\theta}) \rangle}{\varphi(\vec{\theta}) | \varphi(\vec{\theta})} \quad (1)$$

A quantum state is indicated by $\phi$. A Hamiltonian is indicated by H. The Hamiltonian is a function of an intermolecular distance R. A rotation angle used as an optimization variable is indicated by θ. The base energy is the lowest energy. Therefore, when Expression (1) is repeatedly calculated by varying the rotation angle θ, the lowest energy in the energy obtained by the plurality of times of calculation becomes base energy $E_0$. An expression representing the base energy $E_0$ is as follows.
[Expression 2]

$$\frac{\langle \varphi(\vec{\theta}) | H | \varphi(\vec{\theta}) \rangle}{\varphi(\vec{\theta}) | \varphi(\vec{\theta})} \geq E_0 \quad (2)$$

In actual calculation, the Hamiltonian is decomposed into a sum form (H = $H_1$ + $H_2$ + ...), and each Hamiltonian obtained by the decomposition is calculated. In other words, the quantum circuit generation unit 110 generates the quantum circuit for performing the quantum chemical calculation by the VQE for each Hamiltonian obtained by the decomposition.

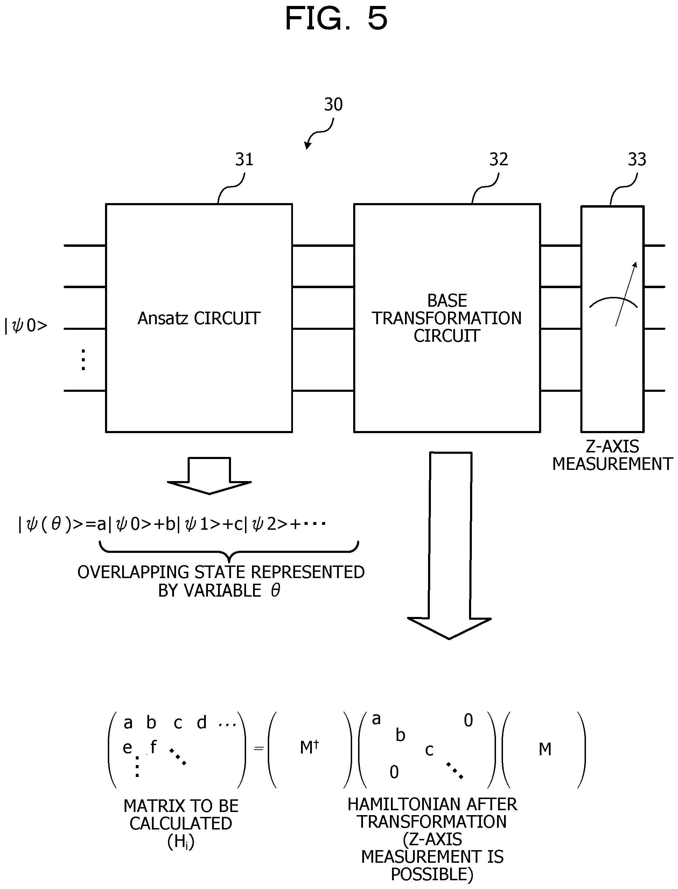

FIG. 5 is a diagram illustrating an example of the quantum circuit of the VQE. A quantum circuit 30 for calculating an i-th Hamiltonian $H_i$ of the VQE includes an Ansatz circuit 31, a base transformation circuit 32, and Z-axis measurement 33.

The Ansatz circuit 31 is a quantum circuit portion for creating a wave function |ψ> expressing an electron orbit of a molecule to be calculated. The wave function represented by the Ansatz circuit 31 is in an overlapping state represented by the variable θ (|ψ(θ)> = a|ψ0> + b|ψ1> + c|ψ2> + ...). When the number of qubits operated in the quantum circuit 30 is 4, the overlapping state is represented as "|0000> → a|0000> + b|0001> + c|0010> + d|0010> + e|0011> + ...".

The base transformation circuit 32 is a quantum circuit portion that transforms a base in order to cause the created wave function |ψ> to act with a matrix to be calculated (the Hamiltonian $H_i$ obtained by decomposing the entire Hamiltonian). By causing a matrix M corresponding to the base transformation circuit 32 to act on the Hamiltonian $H_i$ transformed into a diagonal matrix, Z-axis measurement of the Hamiltonian $H_i$ becomes possible. Causing the matrix M to act is represented by an expression in which a Hermitian conjugate ($M^\dagger$) of the matrix M is multiplied from left of an action target and the matrix M is multiplied from right of the action target.

In this way, in the quantum circuit 30 for the quantum chemical calculation using the VQE, the Ansatz circuit 31 is provided at a preceding stage, and the base transformation circuit 32 is provided at a subsequent stage. Then, after the operation by the base transformation circuit 32, a quantum state is measured by the Z-axis measurement 33.

Here, there are various types of Ansatz circuits in the quantum chemical calculation. Among them, there is an Ansatz circuit including a Givens rotation. The Givens rotation is linear transformation by a matrix. One Ansatz circuit including the Givens rotation is a Jastrow factor ansatz. The Jastrow factor ansatz may express chemical single electron excitation and double electron excitation. Furthermore, the Jastrow factor ansatz has an advantage that a circuit depth is shallower than that of another ansatz that may express the chemical single electron excitation and double electron excitation.

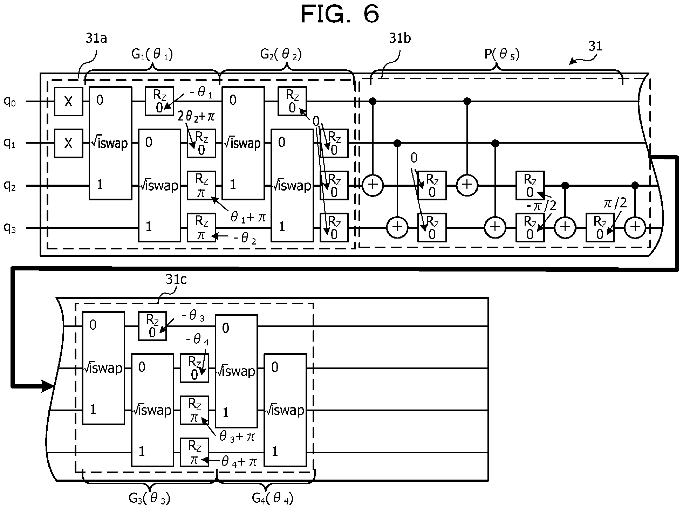

FIG. 6 is a diagram illustrating an example of the Ansatz circuit by the Jastrow factor ansatz. The Ansatz circuit 31 operates four quantum gates. The quantum gates to be operated are defined as $q_0$, $q_1$, $q_2$, and $q_3$.

The Ansatz circuit 31 in double electron excitation expression by the Jastrow factor ansatz is divided into three partial circuits 31a to 31c. Both the partial circuit 31a and the partial circuit 31c indicate single electron excitation by the Givens rotation. The partial circuit 31b indicates a phase rotation.

Each of the partial circuit 31a and the partial circuit 31c includes two Givens rotations. Optimization variables of the same value are applied to the two Givens rotations of the partial circuit 31a. Therefore, for rotation angles of Givens rotations $G_1(\theta_1)$ and $G_2(\theta_2)$ of the partial circuit 31a, $\theta_1 = \theta_2$ is satisfied. Furthermore, optimization variables of the same value are applied to the two Givens rotations of the partial circuit 31c. Therefore, for rotation angles of Givens rotations $G_3(\theta_3)$ and $G_4(\theta_4)$ of the partial circuit 31c, $\theta_3 = \theta_4$ is satisfied. Each of the Givens rotations $G_1(\theta_1)$, $G_2(\theta_2)$, and $G_3(\theta_3)$ includes two $\sqrt{i}$swap gates, and rotation gates around a Z axis. The Givens rotation $G_4(\theta_4)$ includes two $\sqrt{i}$swap gates.

For example, the partial circuit 31a indicating the single electron excitation indicates the Givens rotation for an initial state |0011>. When the Givens rotation $G_1(\theta_1)$ is represented by an expression, "$G_1(\theta_1)|0011> \rightarrow \cos\theta_1|0011> + \sin\theta_1|0010>$" is obtained. When the Givens rotation $G_2(\theta_2)$ is represented by an expression, "$G_2(\theta_2)|0011> \rightarrow \cos\theta_1|0011> + \sin\theta_1|1001>$" is obtained.

The phase rotation indicated by the partial circuit 31b is defined as $P(\theta_5)$. When the phase rotation $P(\theta_5)$ is represented by an expression, "$a|0011> + b|1100> \rightarrow a|0011> + bi|1100>$" is obtained (a and b are complex numbers.).

When causing the Ansatz circuit 31 to act on the initial state |0011> is represented by an expression, "$G_4G_3PG_2G_1|0011> = \cos\Phi|0011> + \sin\Phi|1100>$" is obtained.

Note that rotation angles in the initial state are indicated in the rotation gates around the Z axis in FIG. 6. When values of the rotation angles $\theta_1$, $\theta_2$ $\theta_3$, $\theta_4$, and $\theta_5$ are calculated, the respective rotation gates are set to rotation angles according to values of the optimization variables to be applied.

The rotation angle of the rotation gate for the qubit $q_0$ in the Givens rotation $G_1(\theta_1)$ is "$-\theta_1$" and represented as "$R_z(-\theta_1)$". The rotation angle of the rotation gate for the qubit $q_1$ in the Givens rotation $G_1(\theta_1)$ is "$2\theta_2 + \pi$" and represented as "$R_z(2\theta_2 + \pi)$". The rotation angle of the rotation gate for the qubit $q_2$ in the Givens rotation $G_1(\theta_1)$ is "$\theta_1 + \pi$" and represented as "$R_z(\theta_1 + \pi)$". The rotation angle of the rotation gate for the qubit $q_3$ in the Givens rotation $G_1(\theta_1)$ is "$-\theta_2$" and represented as "$R_z(-\theta_2)$".

The rotation angles of the rotation gates for the respective four qubits in the Givens rotation $G_2(\theta_2)$ are "0" and represented as "$R_z(0)$".

The rotation angle of the first rotation gate for the qubit $q_2$ in the phase rotation $P(\theta_5)$ is "0", and the rotation angle of the second rotation gate is "$-n/2$". These respective rotation gates are represented as "$R_z(0)$" and "$R_z(-\pi/2)$". The rotation angle of the first rotation gate for the qubit $q_3$ in the phase rotation $P(\theta_5)$ is "0", the rotation angle of the second rotation gate is "$-n/2$", and the rotation angle of the third rotation gate is "$n/2$". These respective rotation gates are represented as "$R_z(0)$", "$R_z(-\pi/2)$", and "$R_z(\pi/2)$".

The rotation angle of the rotation gate for the qubit $q_0$ in the Givens rotation $G_3(\theta_3)$ is "$-\theta_3$" and represented as "$R_z(-\theta_3)$". The rotation angle of the rotation gate for the qubit $q_1$ in the Givens rotation $G_3(\theta_3)$ is "$-\theta_4$" and represented as "$R_z(-\theta_4)$". The rotation angle of the rotation gate for the qubit $q_2$ in the Givens rotation $G_3(\theta_3)$ is "$\theta_3 + \pi$" and represented as "$R_z(\theta_3 + \pi)$". The rotation angle of the rotation gate for the qubit $q_3$ in the Givens rotation $G_3(\theta_3)$ is "$\theta_4 + \pi$" and represented as "$R_z(\theta)_4 + \pi)$".

A circuit depth of the Ansatz circuit 31 is O(N) (N is the number of qubits) in order notation. A circuit depth of the base transformation circuit 32 is O(N) in a case where commuting pauli grouping is used, and is N in a case where basis rotation is used. Conventionally, various circuits for reducing the circuit depth of the quantum circuit for the quantum chemical calculation by the VQE have been considered, but further reduction in circuit depth is needed.

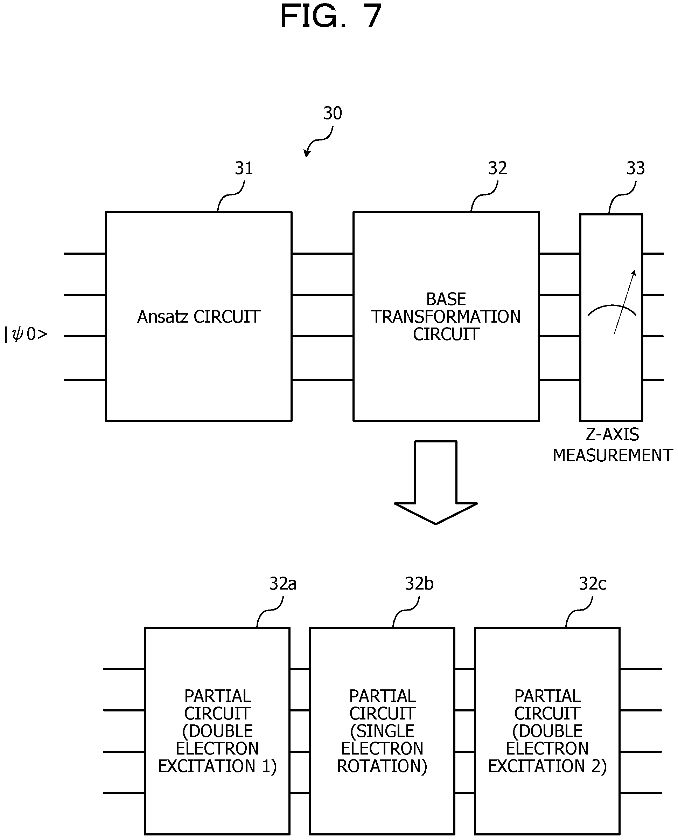

FIG. 7 is a diagram illustrating an example of the base transformation circuit. The base transformation circuit 32 includes, for example, three partial circuits 32a to 32c. The partial circuit 32a is a circuit (double electron excitation circuit) indicating a first double electron excitation operation. The partial circuit 32b is a circuit (single electron rotation circuit) indicating a single electron rotation operation. The partial circuit 32c is a circuit (double electron excitation circuit) indicating a second double electron excitation operation.

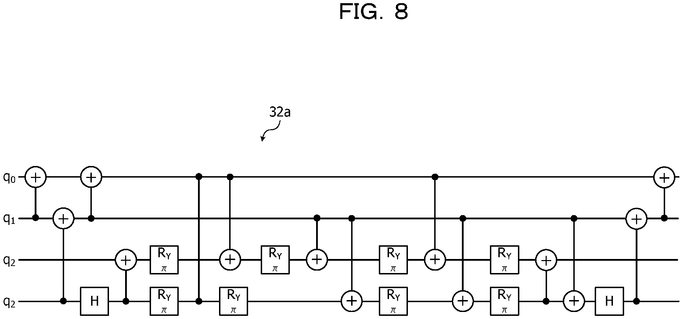

The partial circuits 32a to 32c of the base transformation circuit 32 are, for example, circuits as illustrated in FIGs. 8 to 10 in a case where quantum chemical calculation of a hydrogen molecule is performed. FIG. 8 is a diagram illustrating an example of the partial circuit of the first double electron excitation operation. The partial circuit 32a illustrated in FIG. 8 includes an Hadamard gate, a CNOT gate, a CZ gate, and a rotation gate around a Y axis.

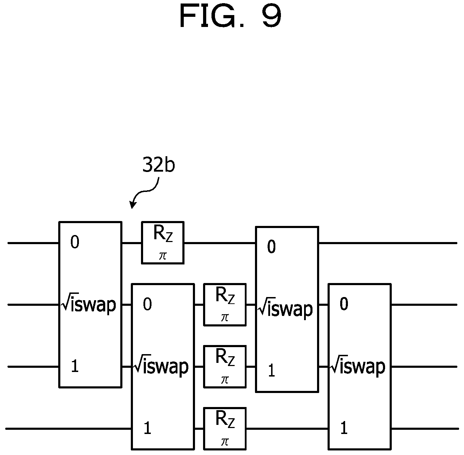

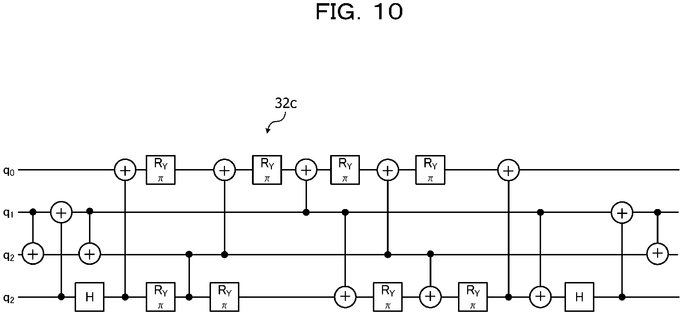

FIG. 9 is an example of the partial circuit indicating the single electron rotation operation. The partial circuit 32b illustrated in FIG. 9 includes a $\sqrt{i}$swap gate and a rotation gate around the Z axis. FIG. 10 is a diagram illustrating an example of the partial circuit of the second double electron excitation operation. The partial circuit 32c illustrated in FIG. 10 includes an Hadamard gate, a CNOT gate, a CZ gate, and a rotation gate around the Y axis.

The quantum circuit generation unit 110 integrates the partial circuits 32a to 32c illustrated in FIGs. 7 to 10 into the Ansatz circuit 31 in order from the partial circuit executed first.

For example, the quantum circuit generation unit 110 generates a quantum circuit obtained by integrating the Ansatz circuit 31 parameterized by the optimization variable $\theta$ and the base transformation circuit 32 that performs a rotation operation at a specific rotation angle $\alpha$ ($\alpha$ is a real number). Here, a parameter $\theta'$ of the circuit obtained by the integration may be represented by, for example, "$\theta' = f(\theta, \alpha) = f(\alpha - f^{-1}(\theta))$". A functional expression for obtaining, when a rotation angle corresponding to the double electron excitation of the Jastrow factor ansatz is defined as x, the optimization variable $\theta$ from the rotation angle is represented by f(x).

The rotation angle corresponding to the double electron excitation indirectly represents ease of transition between states of an electron (referred to as electron transition intensity or electron excitation intensity). For example, a state before the excitation is defined as $|\psi_0\rangle$, and a state after the double electron excitation is defined as $|\psi_1\rangle$. Additionally, a state created by the rotation angle $\theta$ corresponding to the double electron excitation is defined as $|\psi\rangle$. Then, "$|\psi\rangle = \cos\theta|\psi\rangle + \sin\theta|\psi_1\rangle$" is obtained.

Details of a method of calculating the parameter $\theta'$ using the f(x) will be described later. By integrating the circuits, the circuit depth may be reduced. Note that the rotation angle $\alpha$ is determined by a Hamiltonian H given as a problem.

The quantum circuit 30 as illustrated in FIGs. 5 to 10 is a quantum circuit before reduction processing of the circuit depth is performed. Hereinafter, processing of generating a quantum circuit with a reduced circuit depth and calculating a fiducial value of energy based on the quantum circuit will be described in detail.

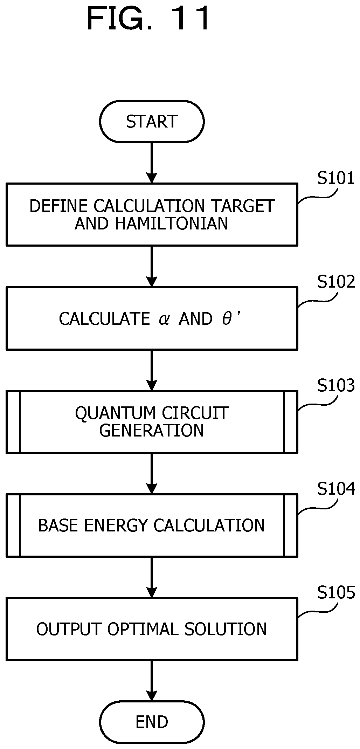

FIG. 11 is a flowchart illustrating an example of a procedure of the quantum chemical calculation by the VQE. Hereinafter, processing illustrated in FIG. 11 will be described in accordance with step numbers.

[Step S101] The quantum circuit generation unit 110 defines a calculation target and a Hamiltonian. For example, the calculation target is specified by a user. For example, when the calculation target is a hydrogen molecule, the quantum circuit generation unit 110 acquires a Hamiltonian of the hydrogen molecule defined in advance.

[Step S102] The quantum circuit generation unit 110 calculates the rotation angle $\alpha$ and the parameter $\theta'$.

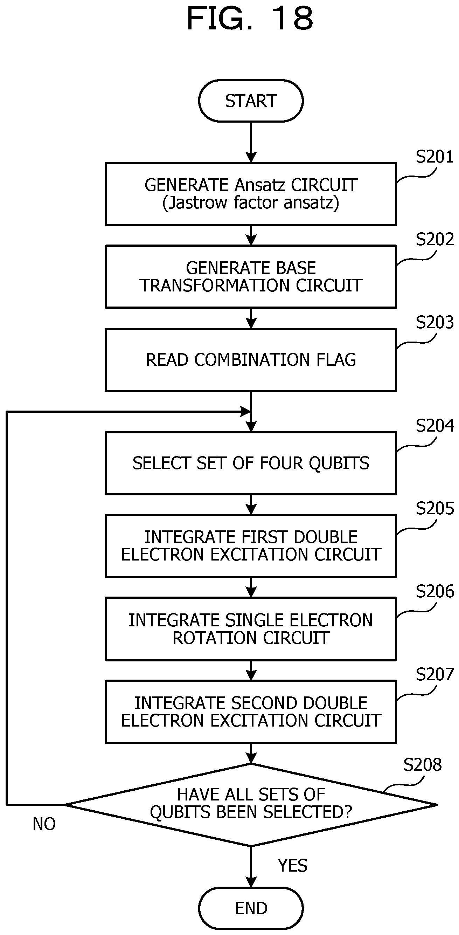

[Step S103] The quantum circuit generation unit 110 generates a quantum circuit in which a circuit depth is reduced by integrating a plurality of partial circuits indicating rotation operations. Details of quantum circuit generation processing will be described later (see FIG. 18).

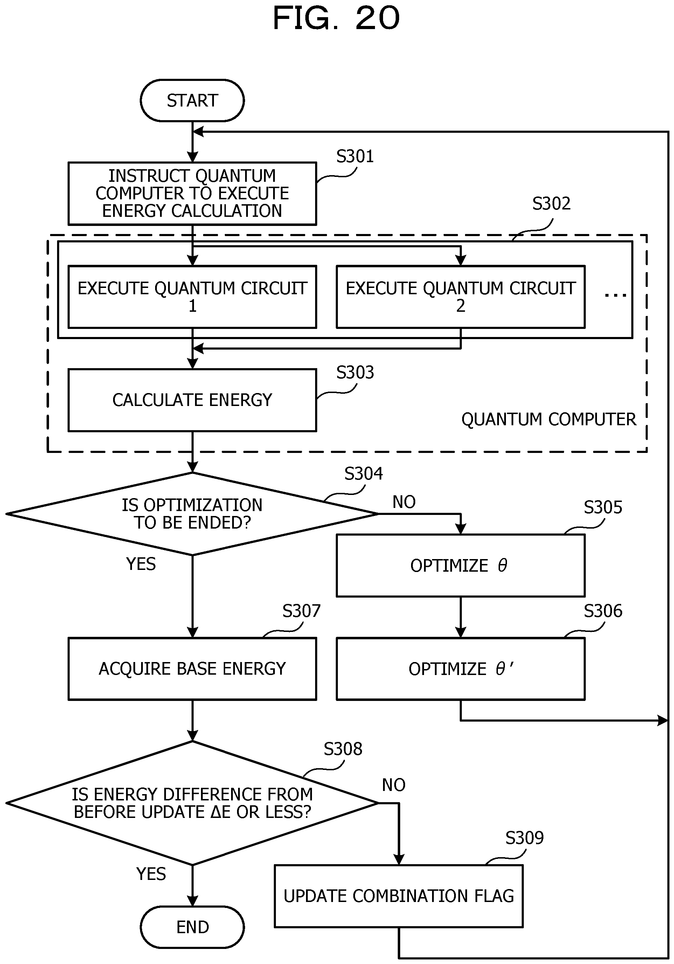

[Step S104] The quantum calculation management unit 120 controls the quantum computer 200 to calculate base energy. The VQE is used to calculate the base energy, and the optimization calculation unit 130 optimizes the optimization variable $\theta$. Details of base energy calculation processing will be described later (see FIG. 20).

[Step S105] The quantum calculation management unit 120 outputs a finally obtained optimal solution (a state where energy becomes a minimum value).

In such a procedure, the quantum chemical calculation by the VQE is performed. Hereinafter, each type of the processing of the quantum chemical calculation will be described in detail.

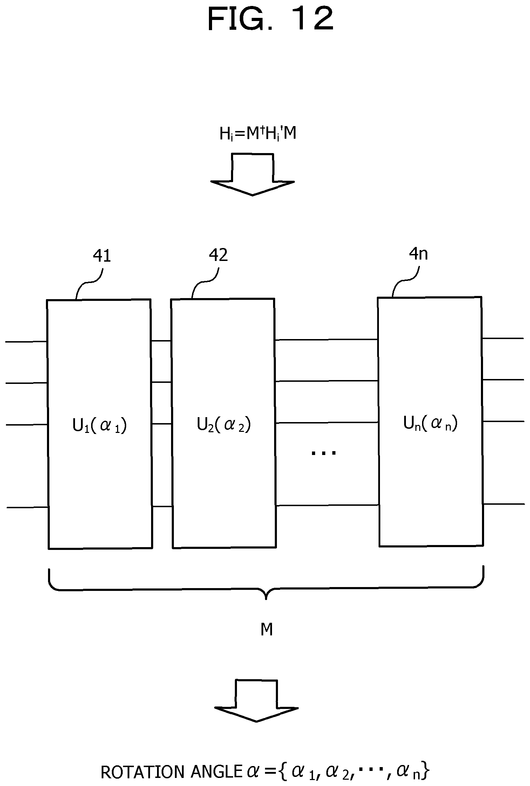

FIG. 12 is a diagram illustrating an example of the method of calculating the rotation angle $\alpha$. For the Hamiltonian $H_i$ obtained by division, a diagonalized matrix is defined as $H_i'$. A base transformation circuit (unitary matrix) M for diagonalizing the Hamiltonian $H_i$ may be represented by a set of unitary rotation operations. The respective plurality of unitary rotation operations are represented by partial circuits 41, 42, ..., 4n. As a result, rotation angles $\alpha_1$, on, ..., $\alpha_n$ in the partial circuits 41, 42, ..., 4n are obtained, respectively.

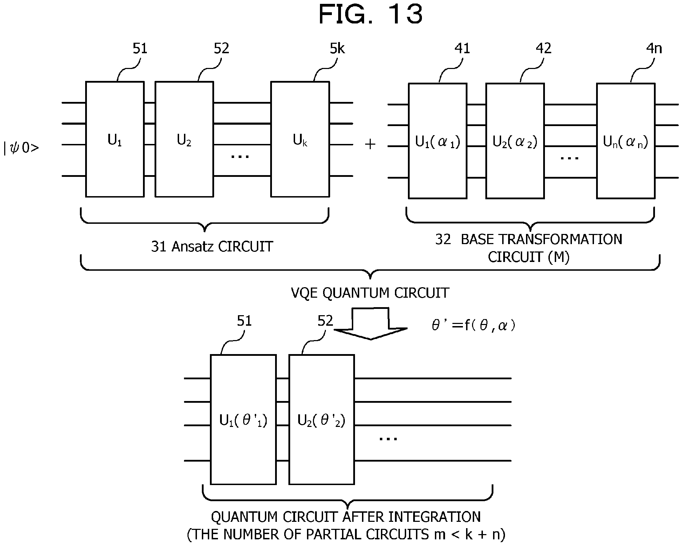

FIG. 13 is a diagram illustrating an example of the method of calculating the parameter $\theta'$. For example, the partial circuits 41, 42, ..., 4n of the base transformation circuit 32 are integrated with partial circuits 51, 52, ..., and 5k indicating rotation operations in the Ansatz circuit 31. At that time, the optimization variable $\theta = \{\theta_1, \theta_2, ...\}$ to be applied to the partial circuits 51, 52, ..., and 5k is obtained. When the partial circuits 41, 42, ..., 4n are integrated with the partial circuits 51, 52, ..., and 5k of the Ansatz circuit 31, a rotation angle after the integration is defined as $\theta' = f(\theta, \alpha)$.

The number (m) of the partial circuits 51, 52, ... of the rotation operations in the quantum circuit after the integration is smaller than the number (k) of the partial circuits 51, 52, ..., and 5k of the Ansatz circuit 31 before the integration and the number (n) of the partial circuits 41, 42, ..., 4n of the base transformation circuit 32. In other words, the circuit depth is shortened.

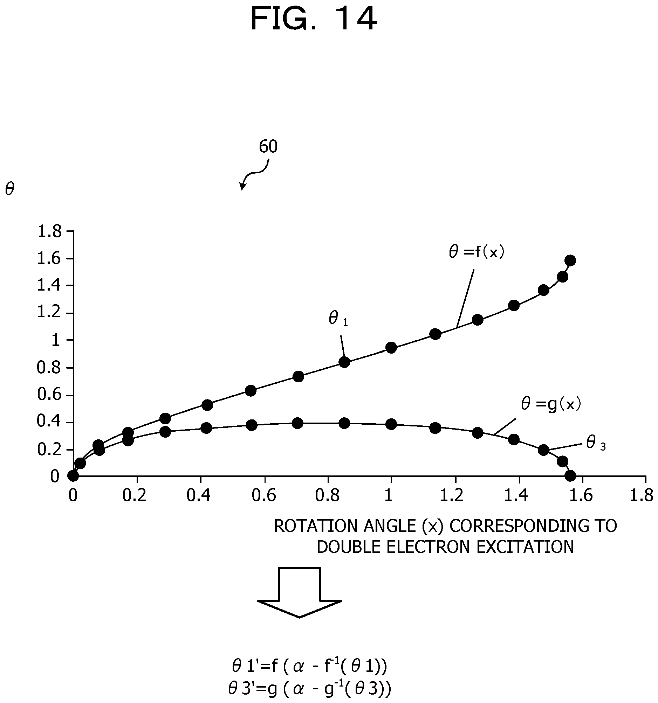

FIG. 14 is a diagram illustrating an example of the method of calculating the rotation angle $\theta'$ after the integration. A graph 60 illustrated in FIG. 14 indicates a relationship between a rotation angle x (representing electron transition intensity) corresponding to double electron excitation and the rotation angle $\theta$ applied to the Jastrow factor ansatz. A horizontal axis of the graph 60 is the rotation angle x corresponding to the double electron excitation, and a vertical axis is the rotation angle $\theta$ applied to the Jastrow factor ansatz. The rotation angle applied to the Jastrow factor ansatz is determined according to electron transition intensity in a molecule to be calculated. Here, a curve that represents the electron transition intensity by the rotation angle x corresponding to the double electron excitation, and indicating a change in a value of the rotation angle $\theta_1$ according to the rotation angle x corresponding to the double electron excitation is represented by a polynomial $\theta = f(x)$. Furthermore, a curve indicating a change in a value of a rotation angle $\theta_3$ according to

the rotation angle x corresponding to the double electron excitation is represented by a polynomial $\theta = g(x)$.

When the $\theta_1$ is obtained, $\theta_1'$ is obtained by substituting a difference between a value obtained by "$f^{-1}(\theta_1)$" and the rotation angle $\alpha$ into x of "$f(x)$". Similarly, when the $\theta_3$ is obtained, $\theta_3'$ is obtained by substituting a difference between a value obtained by "$g^{-1}(\theta_3)$" and the rotation angle $\alpha$ into x of "$g(x)$".

In this way, the rotation angle $\theta'$ after the integration is calculated based on the rotation angle $\theta$ and the rotation angle $\alpha$. In other words, the quantum circuit is parameterized using the rotation angle $\theta'$. In the quantum chemical calculation by the VQE, the rotation angle $\theta$ is repeatedly updated by optimization calculation. Furthermore, the rotation angle $\alpha$ has a different value for each quantum circuit. Therefore, the rotation angle $\theta'$ is calculated for each quantum circuit used for the quantum chemical calculation by the VQE every time the rotation angle $\theta$ is updated.

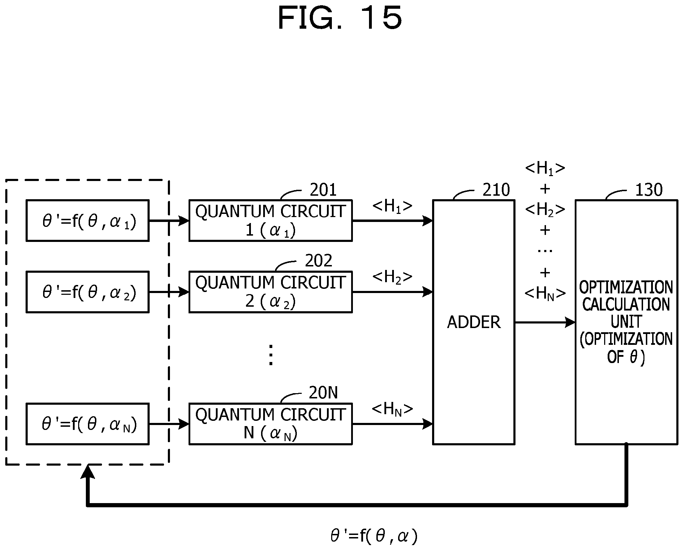

FIG. 15 is a diagram illustrating an example of the optimization of the rotation angle $\theta'$. In the quantum chemical calculation by the VQE, each of a plurality of Hamiltonians ($H_1$, $H_2$, ..., $H_N$) obtained by division is calculated by each of a plurality of quantum circuits 201, 202, ..., 20N. The plurality of calculated Hamiltonians is added by an adder 210 and becomes an expectation value of energy of an entire system. Then, the optimization calculation unit 130 optimizes the rotation angle $\theta$ based on the expectation value of the energy. In other words, the optimization calculation unit 130 updates the rotation angles $\theta_1$, $\theta_2$, ... in a direction in which the expectation value of the energy decreases.

Furthermore, the plurality of quantum circuits 201, 202, ..., 20N have the independent rotation angles $\alpha_1$, $\alpha_2$, ..., $\alpha_N$, respectively. Thus, when the rotation angle $\theta$ is updated by optimization processing, for each of the plurality of quantum circuits 201, 202, ..., 20N, the rotation angle $\theta'$ according to a value of the rotation angle $\alpha$ of the quantum circuit after the update is calculated. For example, the rotation angle $\theta'$ of the quantum circuit 201 is "$f(\theta, \alpha_1)$".

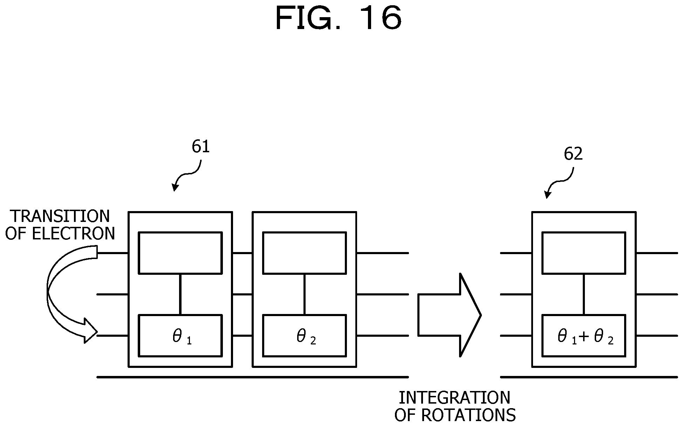

FIG. 16 is a diagram illustrating a first example of integration of rotations. It is assumed that a quantum circuit 61 before integration illustrated in FIG. 16 represents, for example, transition of an electron from a qubit of a first bit to a qubit of a third bit among four qubits. In the quantum circuit 61, a second rotation operation is performed on the same qubit as a first rotation operation. In this case, the two rotation operations may be integrated by adding rotation angles of the two rotation operations. For example, a rotation angle of the first rotation operation of the quantum circuit 61 is $\theta_1$, and a rotation angle of the second rotation operation is $\theta_2$. In a case where the two rotation operations are integrated, the two rotation operations may be integrated into a quantum circuit 62 indicating a rotation operation in which a rotation of $\theta_1 + \theta_2$ is performed.

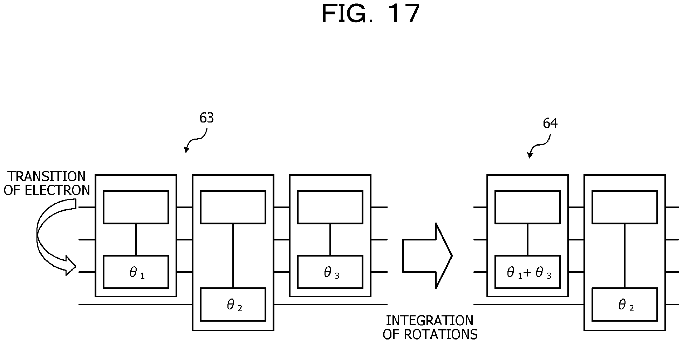

FIG. 17 is a diagram illustrating a second example of the integration of rotations. It is assumed that a quantum circuit 63 before integration illustrated in FIG. 17 represents, for example, transition of an electron from a qubit of a first bit to a qubit of a third bit among four qubits. In the quantum circuit 63, a third rotation operation is performed on the same qubit as a first rotation operation. A second rotation operation of the quantum circuit 63 is a rotation operation on a qubit different from that of the first and third rotation operations. In this case, the three rotation operations may be integrated by adding rotation angles of the first and third rotation operations. For example, a rotation angle of the first rotation operation of the quantum circuit 63 is $\theta_1$, and a rotation angle of the third rotation operation is $\theta_3$. In a case where the two rotation operations are integrated, the two rotation operations are integrated into a rotation operation to in which a rotation of $\theta_1 + \theta_3$ is performed, and a quantum circuit 64 after the integration is generated.

As illustrated in FIG. 17, in a case where a rotation operation in which a qubit to be operated is different is interposed, there is a possibility that calculation accuracy is degraded by the integration. Therefore, whether or not to perform the integration in a case as illustrated in FIG. 17 may be set according to a situation of the accuracy needed, or the like.

Next, details of the generation processing of the quantum circuit obtained by the integration will be described.

FIG. 18 is a flowchart illustrating an example of a procedure of the quantum circuit generation processing. Hereinafter, the processing illustrated in FIG. 18 will be described in accordance with step numbers.

[Step S201] The quantum circuit generation unit 110 generates an Ansatz circuit of the Jastrow factor ansatz.

[Step S202] The quantum circuit generation unit 110 generates a base transformation circuit.

[Step S203] The quantum circuit generation unit 110 reads a combination flag. The combination flag is a flag indicating whether or not to perform, for each combination of qubits, calculation for the combination. The combination flag is indicated in, for example, a combination management table.

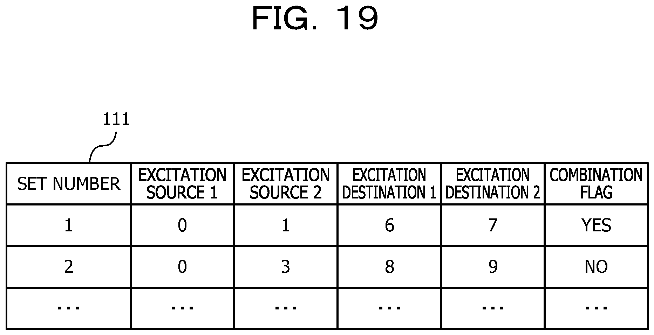

FIG. 19 is a diagram illustrating an example of the combination management table. In a combination management table 111, a record for each combination of four qubits among qubits usable in the quantum computer 200 is registered.

It is assumed that qubits as excitation sources (qubit numbers 0 to k) and qubits as excitation destinations (qubit numbers k+1 to n-1) are given as problems (k is a natural number, and n is a natural number indicating the number of qubits). In this case, a set of a total of four qubits is generated, including a combination of two excitation sources selected from the qubits with the qubit numbers 0 to k and a combination of two excitation destinations selected from the qubits with the qubit numbers k+1 to n-1.

In each record, the respective qubit numbers corresponding to a first excitation source (excitation source 1), a second excitation source (excitation source 2), a first excitation destination (excitation destination 1), and a second excitation destination (excitation destination 2) are set in association with a set number of the generated set. Moreover, in each record, a combination flag indicating whether or not to perform the quantum chemical calculation by the VQE for a combination of the set qubit numbers is set. For example, when the combination flag is "Yes", it is indicated that the calculation is performed, and when the combination flag is "No", it is indicated that the calculation is not performed. The combination management table 111 is stored in, for example, the memory 102 or the storage device 103. The quantum circuit generation unit 110 may read the combination flag from the combination management table 111.

Note that values in a case where the number of qubits is 10 are set in the combination management table 111 of FIG. 19. Among these qubits, the 0-th to third qubits are used as the excitation sources. Furthermore, the fourth to ninth qubits are used as the excitation destinations.

Hereinafter, the description returns to FIG. 18.

[Step S204] The quantum circuit generation unit 110 selects a set of four qubits. For example, the quantum circuit generation unit 110 selects, in order from an upper record of the combination management table 111, a set of qubits set in the record.

[Step S205] For the quantum circuit of the quantum chemical calculation by the VQE corresponding to the selected set of qubits, the quantum circuit generation unit 110 integrates a first double electron excitation circuit in the base transformation circuit into the Ansatz circuit.

[Step S206] For the quantum circuit of the quantum chemical calculation by the VQE corresponding to the selected set of qubits, the quantum circuit generation unit 110 integrates a single electron rotation circuit in the base transformation circuit into the Ansatz circuit.

[Step S207] For the quantum circuit of the quantum chemical calculation by the VQE corresponding to the selected set of qubits, the quantum circuit generation unit 110 integrates a second double electron excitation circuit in the base transformation circuit into the Ansatz circuit. Note that the second double electron excitation circuit may not be integrated into the Ansatz circuit. The second double electron excitation circuit may be integrated in a case where a molecular orbit has symmetry. In a case where the integration is not possible, integration processing of the second double electron excitation circuit is skipped.

[Step S208] The quantum circuit generation unit 110 determines whether or not all sets of qubits have been selected. When all the sets have been selected, the quantum circuit generation unit 110 ends the quantum circuit generation processing. Furthermore, when there is an unselected set of qubits, the quantum circuit generation unit 110 advances the processing to step S204.

In this way, the quantum circuit is generated. Then, base energy is calculated based on the generated quantum circuit.

FIG. 20 is a flowchart illustrating an example of a procedure of the base energy calculation processing. Hereinafter, the processing illustrated in FIG. 20 will be described in accordance with step numbers.

[Step S301] The quantum calculation management unit 120 specifies quantum circuits corresponding to sets of qubits for which the combination flag is YES as calculation targets, and instructs the quantum computer 200 to execute energy calculation.

[Step S302] The quantum computer 200 executes calculation based on the respective quantum circuits specified as the calculation targets in parallel. As a result, a value of a Hamiltonian for each quantum circuit is obtained.

[Step S303] The quantum computer 200 calculates an expectation value of entire energy by totaling the values of the Hamiltonians for the respective quantum circuits. The quantum computer 200 transmits the calculated expectation value of the energy to the quantum calculation management unit 120.

[Step S304] The quantum calculation management unit 120 determines whether or not to end the optimization processing of the rotation angle $\theta$ under a current calculation condition. For example, in a case where a difference between an energy value calculated immediately before and the energy value of this time becomes a predetermined value or less, the quantum calculation management unit 120 determines to end the optimization processing of the rotation angle $\theta$. In a case where it is determined to end the optimization processing of the rotation angle $\theta$, the quantum calculation management unit 120 advances the processing to step S307. Furthermore, in a case where it is determined to continue the optimization processing of the rotation angle $\theta$, the quantum calculation management unit 120 advances the processing to step S305.

[Step S305] The optimization calculation unit 130 executes optimization calculation of the $\theta$ by a predetermined algorithm. In the optimization calculation, an updated value of each rotation angle $\theta$ ($\theta_1$, $\theta_2$, ...) is calculated so that the expectation value of the energy decreases.

[Step S306] The quantum calculation management unit 120 optimizes the rotation angle $\theta'$ of each quantum circuit based on the rotation angle $\theta$ updated by the optimization processing and a value of $\alpha$ for each quantum circuit. Thereafter, the quantum calculation management unit 120 advances the processing to step S301.

[Step S307] The quantum calculation management unit 120 acquires the expectation value of the energy calculated last as base energy according to a current state of the combination flag.

[Step S308] The quantum calculation management unit 120 determines whether or not a difference between the acquired base energy and base energy before updating the combination flag is $\Delta E$ (preset value) or less. When the difference is ΔE or less, the quantum calculation management unit 120 ends the base energy calculation processing. Furthermore, when the difference is larger than ΔE, the quantum calculation management unit 120 advances the processing to step S309.

[Step S309] The quantum calculation management unit 120 updates the combination flag. For example, the quantum calculation management unit 120 changes values of the combination flag of a part of the records of the combination management table 111. Thereafter, the quantum calculation management unit 120 advances the processing to step S301.

The base energy obtained last in this way is the base energy obtained by the quantum chemical calculation by the VQE. In the quantum circuit to be executed by the quantum computer 200 in the base energy calculation, the circuit depth is reduced by the integration of the partial circuits indicating the rotation operations. As a result, the calculation may be ended within a coherence time in the quantum computer 200, and an error occurrence probability may be decreased.

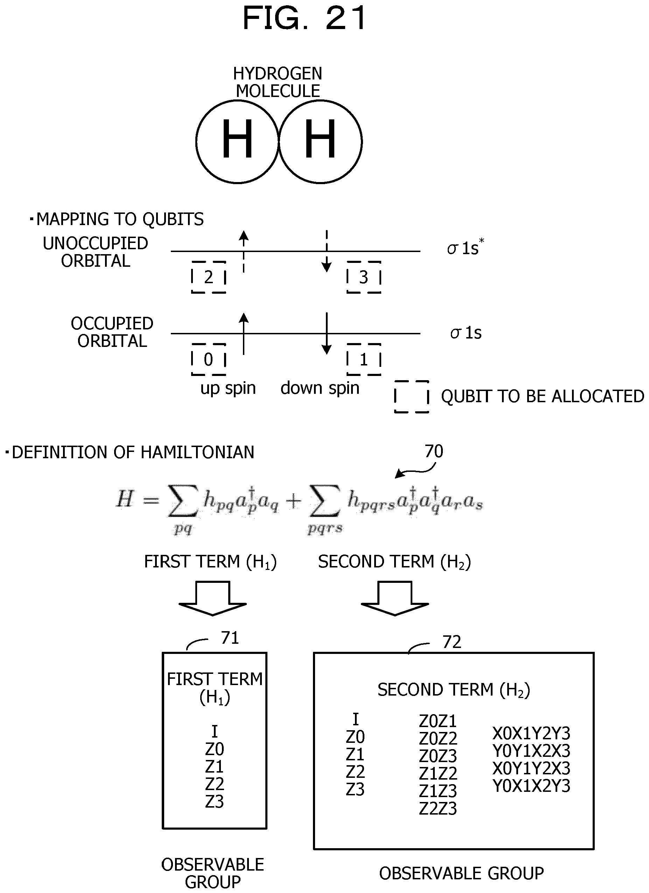

Hereinafter, with reference to FIGs. 21 to 23, an integration example of quantum circuits in the case of obtaining base energy of a hydrogen molecule will be described.

FIG. 21 is a diagram illustrating an example of quantum chemical calculation of the hydrogen molecule. The hydrogen molecule has one occupied orbit and one unoccupied orbit. For each orbit, there are an upward spin (up spin) and a downward spin (down spin) as spin directions of an electron. In a case where the quantum chemical calculation by the VQE is executed, a qubit is allocated for each spin direction of each orbit. As a result, regarding the hydrogen molecule, four qubits are used to obtain the base energy.

A Hamiltonian 70 of the hydrogen molecule is divided into a first term ($H_1$) and a second term ($H_2$). In order to obtain the Hamiltonian $H_1$ of the first term, observables indicated in an observable group 71 are measured. For the observables indicated in the observable group 71, since it is sufficient to perform Z axis measurement, processing such as integration of partial circuits is unnecessary. In order to obtain the Hamiltonian $H_2$ of the second term, observables indicated in an observable group 72 are measured. A quantum circuit for measuring the observables indicated in the observable group 72 may reduce a circuit depth by integrating partial circuits indicating rotation operations.

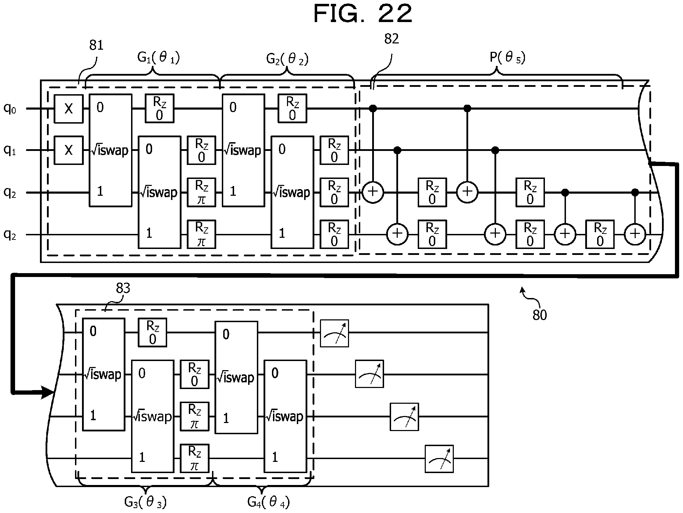

FIG. 22 is a diagram illustrating an example of a quantum circuit for obtaining the Hamiltonian of the first term of the hydrogen molecule. A quantum circuit 80 for obtaining the Hamiltonian of the first term includes partial circuits 81 to 83 similar to the partial circuits 31a to 31c of the Ansatz circuit 31 illustrated in FIG. 6, respectively. For the quantum circuit 80, integration of the partial circuits indicating rotation operations is not performed. Therefore, rotation angles applied to Givens rotations included in the partial circuits 81 to 83 in the quantum circuit 80 are also not changed, and $\theta_1, \theta_2, \theta_3, \theta_4$, and $\theta_5$ are applied as they are.

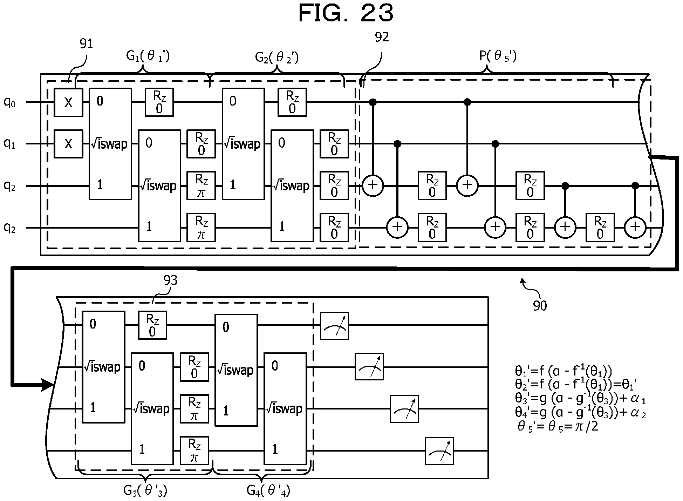

FIG. 23 is a diagram illustrating an example of a quantum circuit for obtaining the Hamiltonian of the second term of the hydrogen molecule. A quantum circuit 90 for obtaining the Hamiltonian of the second term includes partial circuits 91 to 93 similar to the partial circuits 31a to 31c of the Ansatz circuit 31 illustrated in FIG. 6, respectively.

For example, the partial circuit 32a (see FIG. 8) of the first double electron excitation operation of the base transformation circuit 32 is assumed to have the rotation angle $\alpha$ ($\alpha = 0.817$). Here, the respective rotation angles of the Givens rotations of the Ansatz circuit 31 are "$\theta_1, \theta_2, \theta_3, \theta_4$, and $\theta_5$" ($\theta_1 = \theta_2$ and $\theta_3 = \theta_4$). The $\theta_5$ is fixed at "n/2". In this case, in order to integrate the partial circuit 32a, "$\theta_1', \theta_2', \theta_3'$, and $\theta_4'$" are obtained. Calculation expressions are as follows.

-

$$\theta_1' = f(\alpha - f^{-1}(\theta_1))$$

-

$$\theta_2' = f(\alpha - f^{-1}(\theta_1))$$

-

$$\theta_3' = g(\alpha - g^{-1}(\theta_3))$$

-

$$\theta_4' = g(\alpha - g^{-1}(\theta_3))$$

The partial circuit 32a in the base transformation circuit 32 may be integrated by updating the rotation angles "$\theta_1, \theta_2, \theta_3$, and $\theta_4$" applied to the Givens rotations in the Ansatz circuit 31 to "$\theta_1', \theta_2', \theta_3'$, and $\theta_4'$", respectively. In other words, the partial circuit 32a may be deleted from the quantum circuit for the quantum chemical calculation by the VQE.

The partial circuit 32b (see FIG. 9) of the single electron rotation operation of the base transformation circuit 32 is assumed to have the rotation angle $\alpha_1$ and the rotation angle $\alpha_2$. In order to integrate the partial circuit 32b, the rotation angles $\alpha_1$ and $\alpha_2$ are respectively added to the values updated in the partial circuit 32a for the two rotation angles ($\theta_3$ and $\theta_4$) applied to the Givens rotations in the partial circuit 31c indicating the last single electron excitation operation of the Ansatz circuit 31. Calculation expressions are as follows.

$$\theta_3{'}=g\left(\alpha-g^{-1}\left(\theta_3\right)\right)+\alpha_1$$

$$\theta_4{'}=g\left(\alpha-g^{-1}\left(\theta_3\right)\right)+\alpha_2$$

The partial circuit 32b in the base transformation circuit 32 may be integrated by updating the two rotation angles applied to the Givens rotations in the partial circuit 31c. In other words, the partial circuit 32b may be deleted from the quantum circuit for the quantum chemical calculation by the VQE.

The partial circuit 32c (see FIG. 10) of the second double electron excitation operation of the base transformation circuit 32 may be integrated only in a case where a certain condition is satisfied. The condition is a case where a molecular orbit has symmetry. The hydrogen molecule may be integrated because the molecular orbit has symmetry. In a case where the partial circuit 32c is integrated, the partial circuit 32c may be deleted from the quantum circuit without changing the rotation angle applied to the Givens rotation in the Ansatz circuit. As a result, the quantum circuit 90 as illustrated in FIG. 23 is generated.

An energy value calculated using the quantum circuit 80 illustrated in FIG. 22 is defined as $E_1$. An energy value calculated using the quantum circuit 90 illustrated in FIG. 23 is defined as $E_2$. Results of calculating these energy values are as follows.

$$E_1=<\theta_1,\theta_3|H_1|\theta_1,\theta_3>=-2.486508$$

$$E_2=<\theta_1{'}\theta_3{'}|H_2{'}|\theta_1{'}\theta_3{'}>=1.361165$$

Entire base energy E is as follows.

$$E=E_1+E_2=-1.125343$$

An exact solution of the base energy of the hydrogen molecule is "-1.137270". From this, it may be seen that the calculation may be performed with sufficient accuracy even when the calculation is performed by the quantum circuit in which integration of the partial circuits indicating the rotation operations is performed.

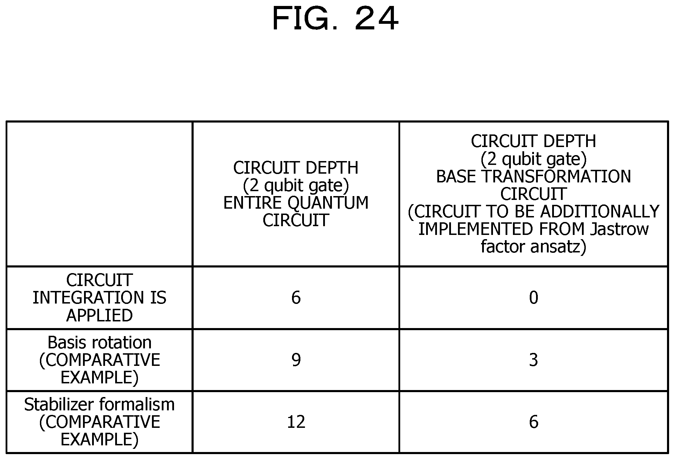

FIG. 24 is a diagram illustrating an example of a comparison result of a circuit depth. In the example of FIG. 24, a comparison result of a circuit depth in a case where the quantum chemical calculation by the VQE of the base energy of the hydrogen molecule is implemented is indicated. As an index of the circuit depth, the number of two-qubit gates is used.

For example, a circuit depth of the partial circuit of the single electron excitation illustrated in FIGs. 22 and 23 is "1". The partial circuit for the phase rotation includes four two-qubit gates, and a circuit depth is "4". Therefore, a circuit depth in a case where the circuit integration indicated in the second embodiment is applied is "6". This circuit depth remains the circuit depth of the Ansatz circuit, and a circuit to be additionally implemented is "0".

On the other hand, a circuit depth of a quantum circuit of "Basis rotation" (comparative example) is "9". This circuit depth means that a circuit having a circuit depth "3" is further added to the circuit depth of the Ansatz circuit.

Furthermore, a circuit depth of a quantum circuit of "Stabilizer formalism" (comparative example) is "12". This circuit depth means that a circuit having a circuit depth "6" is further added to the circuit depth of the Ansatz circuit.

In this way, the circuit depth is greatly reduced by integrating the partial circuits indicating the rotation operations.

[Other Embodiments]

In the second embodiment, the example of the case where the base energy of the hydrogen molecule is calculated is indicated, but the processing indicated in the second embodiment is also applicable to another type of the quantum chemical calculation.

The above description merely indicates a principle of the present invention. Moreover, numerous modifications and variations may be made by those skilled in the art, and the present invention is not limited to the above-described or illustrated exact configuration and application example, and all corresponding modifications and equivalents are regarded to fall within the scope of the present invention by appended claims and equivalents thereof.

REFERENCE SIGNS LIST

1, 1a Quantum circuit
2 First quantum circuit
2a, 2b, ... Partial circuit
3 Second quantum circuit
3a, 3b, ... Partial circuit
10 Information processing device
11 Storage unit
12 Processing unit

**Claims**

1. An information processing program for causing a computer to execute processing comprising:

   acquiring a quantum circuit to perform quantum chemical calculation by a variational quantum eigensolver, which includes a first quantum circuit to create a wave function that expresses an electron orbit of a molecule to be calculated and a second quantum circuit to transform a base of the wave function;
   changing a first rotation angle applied to a rotation operation in the first quantum circuit according to a second rotation angle applied to a partial circuit that indicates a rotation operation in the second quantum circuit; and
   deleting the partial circuit from the quantum circuit.

2. The information processing program according to claim 1, wherein
   the first rotation angle is a rotation angle applied to a rotation operation of a Givens rotation.

3. The information processing program according to claim 1 or 2, wherein
   a value of the first rotation angle after the change is calculated based on a functional expression that indicates a relationship between a third rotation angle that corresponds to double electron excitation and the second rotation angle.

4. The information processing program according to claim 3, wherein
   a value of an inverse function of the functional expression to obtain the first rotation angle from the third rotation angle in a case where a value of the first rotation angle before the change is input to the inverse function is obtained, the obtained value of the inverse function is subtracted from a value of the second rotation angle, and a value of the functional expression obtained by inputting a result of the subtraction into the functional expression is determined as the first rotation angle after the change.

5. The information processing program according to any one of claims 1 to 4, wherein
   a plurality of partial circuits in the second quantum circuit are selected as the partial circuits to be deleted in order from earliest execution order, and every time the partial circuit is selected, processing of changing the first rotation angle according to the second rotation angle applied to the selected partial circuit and deleting the selected partial circuit is executed.

6. The information processing program according to any one of claims 1 to 5, for further causing the computer to execute processing comprising:

calculating an energy value by the variational quantum eigensolver based on the quantum circuit after the partial circuit is deleted; and

calculating, every time a value of the first rotation angle is updated by optimization processing of the first rotation angle in the variational quantum eigensolver, the first rotation angle to be applied to the next energy calculation based on the quantum circuit based on the updated value by the optimization processing of the first rotation angle and the second rotation angle.

7. An information processing method for causing a computer to execute processing comprising:

acquiring a quantum circuit to perform quantum chemical calculation by a variational quantum eigensolver, which includes a first quantum circuit to create a wave function that expresses an electron orbit of a molecule to be calculated and a second quantum circuit to transform a base of the wave function;

changing a first rotation angle applied to a rotation operation in the first quantum circuit according to a second rotation angle applied to a partial circuit that indicates a rotation operation in the second quantum circuit; and

deleting the partial circuit from the quantum circuit.

8. An information processing device comprising:
a processing unit configured to:

acquire a quantum circuit to perform quantum chemical calculation by a variational quantum eigensolver, which includes a first quantum circuit to create a wave function that expresses an electron orbit of a molecule to be calculated and a second quantum circuit to transform a base of the wave function;

change a first rotation angle applied to a rotation operation in the first quantum circuit according to a second rotation angle applied to a partial circuit that indicates a rotation operation in the second quantum circuit; and

delete the partial circuit from the quantum circuit.

# FIG. 1

# FIG. 2

100                                          200

| CLASSICAL COMPUTER | | QUANTUM COMPUTER |
|---|---|---|

# FIG. 3

# FIG. 4

# FIG. 5

30

31

32

33

```
|ψ0>  ┌──────────────┐   ┌──────────────────┐  ┌──────────┐
      │              │   │      BASE        │  │          │
      │ Ansatz CIRCUIT│   │ TRANSFORMATION   │  │          │
      │              │   │     CIRCUIT      │  │          │
      └──────────────┘   └──────────────────┘  └──────────┘
                                                Z-AXIS
                                                MEASUREMENT
```

$$|\psi(\theta)>=a|\psi0>+b|\psi1>+c|\psi2>+\cdots$$

OVERLAPPING STATE REPRESENTED
BY VARIABLE $\theta$

$$\begin{pmatrix} a & b & c & d & \cdots \\ e & f & & \ddots \\ \vdots & & & \end{pmatrix} = \begin{pmatrix} & M^{\dagger} & \end{pmatrix} \begin{pmatrix} a & & & 0 \\ & b & & \\ & & c & \\ 0 & & & \ddots \end{pmatrix} \begin{pmatrix} & M & \end{pmatrix}$$

MATRIX TO BE
CALCULATED
($H_i$)

HAMILTONIAN AFTER
TRANSFORMATION
(Z-AXIS
MEASUREMENT IS
POSSIBLE)

# FIG. 6

# FIG. 7

30

31

Ansatz CIRCUIT

32

BASE
TRANSFORMATION
CIRCUIT

33

Z-AXIS
MEASUREMENT

| ψ0>

32a

PARTIAL
CIRCUIT
(DOUBLE
ELECTRON
EXCITATION 1)

32b

PARTIAL
CIRCUIT
(SINGLE
ELECTRON
ROTATION)

32c

PARTIAL
CIRCUIT
(DOUBLE
ELECTRON
EXCITATION 2)

# FIG. 8

# FIG. 9

FIG. 10

# FIG. 11

```
        ┌─────────┐
        │  START  │
        └─────────┘
             │
             ▼
┌───────────────────────────────┐  S101
│   DEFINE CALCULATION TARGET    │
│        AND HAMILTONIAN         │
└───────────────────────────────┘
             │
             ▼
┌───────────────────────────────┐  S102
│      CALCULATE α AND θ'        │
└───────────────────────────────┘
             │
             ▼
┌───────────────────────────────┐  S103
│       QUANTUM CIRCUIT          │
│         GENERATION             │
└───────────────────────────────┘
             │
             ▼
┌───────────────────────────────┐  S104
│     BASE ENERGY CALCULATION    │
└───────────────────────────────┘
             │
             ▼
┌───────────────────────────────┐  S105
│     OUTPUT OPTIMAL SOLUTION    │
└───────────────────────────────┘
             │
             ▼
        ┌─────────┐
        │   END   │
        └─────────┘
```

# FIG. 12

$$H_i = M^\dagger H_i' M$$

$U_1(\alpha_1)$  41   $U_2(\alpha_2)$  42   $\cdots$   $U_n(\alpha_n)$  4n

M

ROTATION ANGLE $\alpha = \{\alpha_1, \alpha_2, \cdots, \alpha_n\}$

# FIG. 13

$$\theta' = f(\theta, \alpha)$$

# FIG. 14

ROTATION ANGLE (x) CORRESPONDING TO
DOUBLE ELECTRON EXCITATION

$$\theta 1' = f(\alpha - f^{-1}(\theta 1))$$
$$\theta 3' = g(\alpha - g^{-1}(\theta 3))$$

# FIG. 15

$\theta'=f(\theta, \alpha_1)$ → QUANTUM CIRCUIT 1 ($\alpha_1$) ⌒ 201 → $<H_1>$

$\theta'=f(\theta, \alpha_2)$ → QUANTUM CIRCUIT 2 ($\alpha_2$) ⌒ 202 → $<H_2>$

$\theta'=f(\theta, \alpha_N)$ → QUANTUM CIRCUIT N ($\alpha_N$) ⌒ 20N → $<H_N>$

ADDER ⌒ 210

$<H_1>$
+
$<H_2>$
+
...
+
$<H_N>$

OPTIMIZATION CALCULATION UNIT (OPTIMIZATION OF $\theta$) ⌒ 130

$\theta'=f(\theta, \alpha)$

# FIG. 16

# FIG. 17

TRANSITION
OF ELECTRON

63

$\theta_1$

$\theta_2$

$\theta_3$

INTEGRATION
OF ROTATIONS

64

$\theta_1 + \theta_3$

$\theta_2$

# FIG. 18

START

GENERATE Ansatz CIRCUIT
(Jastrow factor ansatz) — S201

GENERATE BASE
TRANSFORMATION CIRCUIT — S202

READ COMBINATION FLAG — S203

SELECT SET OF FOUR QUBITS — S204

INTEGRATE FIRST DOUBLE
ELECTRON EXCITATION CIRCUIT — S205

INTEGRATE SINGLE ELECTRON
ROTATION CIRCUIT — S206

INTEGRATE SECOND DOUBLE
ELECTRON EXCITATION CIRCUIT — S207

HAVE ALL SETS OF
QUBITS BEEN SELECTED? — S208

NO

YES

END

# FIG. 19

111

| SET NUMBER | EXCITATION SOURCE 1 | EXCITATION SOURCE 2 | EXCITATION DESTINATION 1 | EXCITATION DESTINATION 2 | COMBINATION FLAG |
|---|---|---|---|---|---|
| 1 | 0 | 1 | 6 | 7 | YES |
| 2 | 0 | 3 | 8 | 9 | NO |
| ... | ... | ... | ... | ... | ... |

# FIG. 20

START

INSTRUCT QUANTUM COMPUTER TO EXECUTE ENERGY CALCULATION — S301

S302

QUANTUM COMPUTER

EXECUTE QUANTUM CIRCUIT 1

EXECUTE QUANTUM CIRCUIT 2 ...

CALCULATE ENERGY — S303

IS OPTIMIZATION TO BE ENDED? — S304

NO → OPTIMIZE $\theta$ — S305

OPTIMIZE $\theta'$ — S306

YES → ACQUIRE BASE ENERGY — S307

IS ENERGY DIFFERENCE FROM BEFORE UPDATE ΔE OR LESS? — S308

NO → UPDATE COMBINATION FLAG — S309

YES → END

# FIG. 21

HYDROGEN
MOLECULE

H H

- MAPPING TO QUBITS

UNOCCUPIED
ORBITAL
$\sigma 1s^*$

$|\ 2\ |$ $|\ 3\ |$

OCCUPIED
ORBITAL
$\sigma 1s$

$|\ 0\ |$ $|\ 1\ |$

up spin    down spin        $|\ \ |$ QUBIT TO BE ALLOCATED

- DEFINITION OF HAMILTONIAN                    70

$$H = \sum_{pq} h_{pq} a_p^\dagger a_q + \sum_{pqrs} h_{pqrs} a_p^\dagger a_q^\dagger a_r a_s$$

FIRST TERM ($H_1$)        SECOND TERM ($H_2$)

71

| FIRST TERM ($H_1$) |
|---|
| I |
| Z0 |
| Z1 |
| Z2 |
| Z3 |

OBSERVABLE
GROUP

72

| SECOND TERM ($H_2$) | | |
|---|---|---|
| I | Z0Z1 | X0X1Y2Y3 |
| Z0 | Z0Z2 | Y0Y1X2X3 |
| Z1 | Z0Z3 | X0Y1Y2X3 |
| Z2 | Z1Z2 | Y0X1X2Y3 |
| Z3 | Z1Z3 | |
| | Z2Z3 | |

OBSERVABLE GROUP

# FIG. 22

# FIG. 23

$$\theta_1' = f\,(a - f^{-1}(\theta_1))$$
$$\theta_2' = f\,(a - f^{-1}(\theta_1)) = \theta_1'$$
$$\theta_3' = g\,(a - g^{-1}(\theta_3)) + \alpha_1$$
$$\theta_4' = g\,(a - g^{-1}(\theta_3)) + \alpha_2$$
$$\theta_5' = \theta_5 = \pi/2$$

# FIG. 24

| | CIRCUIT DEPTH (2 qubit gate) ENTIRE QUANTUM CIRCUIT | CIRCUIT DEPTH (2 qubit gate) BASE TRANSFORMATION CIRCUIT (CIRCUIT TO BE ADDITIONALLY IMPLEMENTED FROM Jastrow factor ansatz) |
|---|---|---|
| CIRCUIT INTEGRATION IS APPLIED | 6 | 0 |
| Basis rotation (COMPARATIVE EXAMPLE) | 9 | 3 |
| Stabilizer formalism (COMPARATIVE EXAMPLE) | 12 | 6 |

## INTERNATIONAL SEARCH REPORT

| International application No. |
| --- |
| **PCT/JP2022/003792** |

| A. | CLASSIFICATION OF SUBJECT MATTER |
| --- | --- |

*G06N 10/60*(2022.01)i
FI:   G06N10/00

According to International Patent Classification (IPC) or to both national classification and IPC

| B. | FIELDS SEARCHED |
| --- | --- |

Minimum documentation searched (classification system followed by classification symbols)

G06N10/00-10/80; G16C10/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | FAN, Yi et al. , Circuit-Depth Reduction of Unitary-Coupled-Cluster Ansatz by Energy Sorting, arXiv.org [online], arXiv:2106.15210v1, Cornell University, 2021, pp. 1-10, [retrieved on 12 April 2022], Internet : <URL: https://arxiv.org/pdf/2106.15210v1.pdf> <DOI: 10.48550/ARXIV.2106.15210>  entire text | 1-8 |
| A | US 2021/0287761 A1 (RIVER LANE RESEARCH LTD.) 16 September 2021 (2021-09-16)  entire text | 1-8 |

| ☐ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 April 2022** | **19 April 2022** |

| Name and mailing address of the ISA/JP | Authorized officer |
| --- | --- |
| **Japan Patent Office (ISA/JP)**  **3-4-3 Kasumigaseki, Chiyoda-ku, Tokyo 100-8915**  **Japan** | |
| | Telephone No. |

Form PCT/ISA/210 (second sheet) (January 2015)

## INTERNATIONAL SEARCH REPORT
### Information on patent family members

International application No.

**PCT/JP2022/003792**

| Patent document cited in search report | Publication date (day/month/year) | Patent family member(s) | Publication date (day/month/year) |
|---|---|---|---|
| US 2021/0287761 A1 | 16 September 2021 | WO 2021/181082 A1 | |

Form PCT/ISA/210 (patent family annex) (January 2015)

**EP 4 475 041 A1**

**Patent documents cited in the description**

- JP 2020144400 A
- WO 2020090559 A